**Europäisches Patentamt**

**European Patent Office**

**Office européen des brevets**

(19)

(11) Veröffentlichungsnummer : **0 363 617 B1**

(12) **EUROPÄISCHE PATENTSCHRIFT**

(45) Veröffentlichungstag der Patentschrift :
**29.07.92 Patentblatt 92/31**

(51) Int. Cl.⁵ : **B28D 1/14**

(21) Anmeldenummer : **89115757.0**

(22) Anmeldetag : **26.08.89**

(54) **Bohrvorrichtung zur Herstellung von Bohrlöchern mit Hinterschneidung.**

(30) Priorität : **14.10.88 DE 3835025**
**04.02.89 DE 3903369**

(43) Veröffentlichungstag der Anmeldung :
**18.04.90 Patentblatt 90/16**

(45) Bekanntmachung des Hinweises auf die
Patenterteilung :
**29.07.92 Patentblatt 92/31**

(84) Benannte Vertragsstaaten :
**AT BE CH DE ES FR GB GR IT LI NL SE**

(56) Entgegenhaltungen :
**EP-A- 0 139 866**
**DE-A- 2 349 998**
**DE-A- 2 948 682**
**DE-A- 3 335 074**
**DE-B- 1 203 660**
**FR-A- 902 101**

(73) Patentinhaber : **fischerwerke Artur Fischer**
**GmbH & Co. KG**
**Weinhalde 14 - 18**
**W-7244 Waldachtal 3/Tumlingen (DE)**

(72) Erfinder : **Fischer, Artur, Prof. Dr. h. c.**
**Weinhalde 34**
**W-7244 Waldachtal 3/Tumlingen (DE)**

EP 0 363 617 B1

**Beschreibung**

Die Erfindung betrifft eine Bohrvorrichtung zur Herstellung von Bohrlöchern mit Hinterschneidung gemäß der Gattung des Anspruches 1.

Aus der DE-OS 33 40 090 ist eine Bohrvorrichtung der eingangs genannten Gattung bekannt, bei der ein Bohrer in eine Bohreraufnahme einschraubbar ist. Im Bereich der Bohreraufnahme ist eine Absaugglocke vorgesehen, die die Bohreraufnahme und den Bohrschaft umschließt. Die Absaugglocke wird über einen Absaugschlauch an ein Sauggebläse einer Bohrmaschine oder dergleichen angeschlossen. Die Absaugvorrichtung hat den Zweck, daß das im Bohrloch anfallende Bohrmehl während des Bohrvorganges abgesaugt wird. Bei dieser bekannten Vorrichtung ist der Bohrschaft mit seitlichem Spiel in einer Absaughülse geführt, so daß der Bohrer innerhalb der Absaughülse verschwenkbar ist. Durch die Schwenkbewegung kann am Bohrlochgrund eine Bohrlocherweiterung erzeugt werden, die üblicherweise als Hinterschneidung bezeichnet wird.

In einem Bohrloch mit Hinterschneidung lassen sich metallische Spreizdübel einsetzen, die im Bereich der Hinterschneidung aufspreizen und somit formschlüssig im Bohrloch verankert werden können.

Um eine möglichst exakte Hinterschneidung am Bohrlochgrund herstellen zu können, muß die Schwenkbewegung des Bohrers begrenzt werden. Dies kann dadurch erreicht werden, daß der Bohrer etwa in der Mitte des Bohrschaftes eine Querschnittsvergrößerung besitzt, die als Schwenklager dient, welches sich an der Bohrlochwand abstützt. Durch die Querschnittsvergrößerung wird jedoch ein Absaugen des Bohrmehls erschwert, da im Bereich der Querschnittsvergrößerung allenfalls nur noch ein geringer Spalt zum Absaugen frei bleibt.

Ebenfalls eine Bohrvorrichtung zur Herstellung von Bohrlöchern mit Hinterschneidung ist aus der DE-A-2 349 998 bekannt. Zu diesem Zweck weist der aus dieser Druckschrift bekannte Bohrer einen Bund als Querschnittserweiterung auf, der im Bohrloch oder an der Bohrlochmündung ein Schwenklager bildet. Diese Bohrvorrichtung weist jedoch keine Vorkehrungen auf, um das beim Bohren und Hinterschneiden des Bohrloches entstehende Bohrmehl abzusaugen.

Ebenfalls einen Bohrer mit einer Querschnittserweiterung im mittleren Bereich des Bohrschaftes offenbart die FR-A-902 101. Die aus dieser Druckschrift bekannte Querschnittserweiterung dient jedoch nicht zur Bildung eines Schwenklagers, um die Ausreibung einer Hinterschneidung zu ermöglichen. Durch die Erweiterung des Bohrschaftes ergibt sich lediglich ein Stufenbohrer, der ein Teil des zylindrischen Bohrloches auf einen größeren Durchmesser ausreibt.

Aus der DE-A-2 948 682 ist ein Absaugbohrer bekannt, der eine vom Bohrkopf ausgehende axiale Durchgangsbohrung aufweist. Diese Durchgangsbohrung mündet in den Absaugraum einer Saugglocke, so daß mittels einer Saugpumpe das beim Bohren anfallende Bohrmehl abgesaugt werden kann. Diese Bohrvorrichtung ist allerdings nur zur Herstellung von zylindrischen Bohrlöchern geeignet.

Der Erfindung liegt die Aufgabe zugrunde, eine Bohrvorrichtung zur Herstellung von Bohrlöchern mit Hinterschneidung mit einer Absaugeinrichtung zu versehen, die im Aufbau einfach ist und ein Absaugen des Bohrmehles von der Bohrerspitze ermöglicht.

Die Lösung dieser Aufgabe wird durch die im Anspruch 1 angegebenen Merkmale erreicht. Die vom Bohrkopf ausgehende axiale Durchgangsbohrung ermöglicht ein Absaugen unmittelbar an der Bohrerspitze, wobei die im Bereich der Querschnittserweiterung des Bohrers vorgesehenen Kerben ein Nachströmen der abgesaugten Luftmenge zulassen. Die Kerben haben außerdem den Vorteil, daß der Bohrschaft im Bohrloch nicht festklemmen kann. Bei einer Ausführung mit glattem Bohrschaft und einer Bohrschafterweiterung, die in etwa dem Durchmesser des Bohrkopfes entspricht, tritt häufig ein Festklemmen des Bohrers auf, wie dies Versuchsbohrungen gezeigt haben.

Die Querschnittserweiterung im mittleren Bereich des Bohrschaftes bildet im Zusammenwirken mit der Bohrlochwandung ein Schwenklager, das nach Fertigstellung des zylindrischen Teils des Bohrloches ein Ausschwenken des Bohrers bis zur Anlage der sich verjüngenden Bohrschaftflächen an der Bohrlochwandung ermöglicht. Im ausgeschwenkten Zustand des Bohrschaftes wird der Bohrer mehrmals um die Mittelachse getaumelt, so daß mit den Seitenschneiden der Bohrplatte die Hinterschneidung in der Bohrlochtiefe ausgerieben wird.

Der Bohrer ist vorzugsweise mittels eines Gewindeabschnitts in die Bohreraufnahme eingeschraubt, die einen Absaugraum bildet und von einer röhrenförmigen Absaugglocke umschlossen ist. Vorzugsweise besteht die Absaugglocke aus einem Rohrabschnitt mit seitlich abstehendem Absaugstutzen, an den in ansich bekannter Weise ein Absaugschlauch einer Saugpumpe anschließbar ist. Der Rohrabschnitt der Absaugglocke wird dabei auf sehr einfache Weise zwischen zwei Flanschen gehalten, wobei der eine Flansch an der Bohreraufnahme und der andere Flansch am Bohrschaft ausgebildet ist. Der am Bohrschaft ausgebildete Flansch dient gleichzeitig als Tiefenanschlag, der die maximale Bohrlochtiefe bestimmt.

Die am Bohrschaft ausgebildeten, etwa 1 bis 2 cm langen Kerben besitzen vorzugsweise eine Steigung, daß sie das in diesem Bereich anfallende Bohrmehl in Richtung Bohrkopf befördern. Die Steigung der Kerben kann jedoch auch abwechselnd entgegengesetzt oder einheitlich wie bei Bohrmehlnuten ausgebildet sein, sofern dies für spezielle Anwendungsfälle als geeignet erscheint. Die Kerben dienen sowohl als Zuluftkanäle als auch zum Weitertransport des in diesem Bereich anfallenden Bohrmehls.

Damit die Bohrplatte im Bohrkopf optimal gelagert werden kann, ist es vorteilhaft, die Durchgangsbohrung mit Abstand seitlich an der Bohrplatte vorbeizuführen. Die Bohrplatte kann somit in eine in den massiven Teil des Bohrkopfes eingebrachte Nut eingesetzt werden.

Besonders vorteilhaft ist es, die Durchgangsbohrung im Bereich des Bohrkopfes zu verzweigen, damit an jeder Seite der Bohrplatte ein Kanal der Durchgangsbohrung zu einer Absaugöffnung führt. Man kann hier auch von einer Gabelung der Durchgangsbohrung sprechen. Die sich daraus ergebenden zwei Absaugöffnungen ermöglichen es, daß zu beiden Seiten der Bohrplatte das anfallende Bohrmehl unmittelbar abgesaugt werden kann.

Die Erfindung wird nachfolgend anhand der Zeichnung näher erläutert.

Es zeigen:

Figur 1 eine dreiteilige erfindungsgemäße Bohrvorrichtung,

Figur 2 einen Querschnitt der Bohreraufnahme der Bohrvorrichtung gemäß Figur 1 und

Figur 3 den vorderen Teil des Bohrers mit einer verzweigten bzw. gegabelten Durchgangsbohrung (Seitenansicht und Stirnseite).

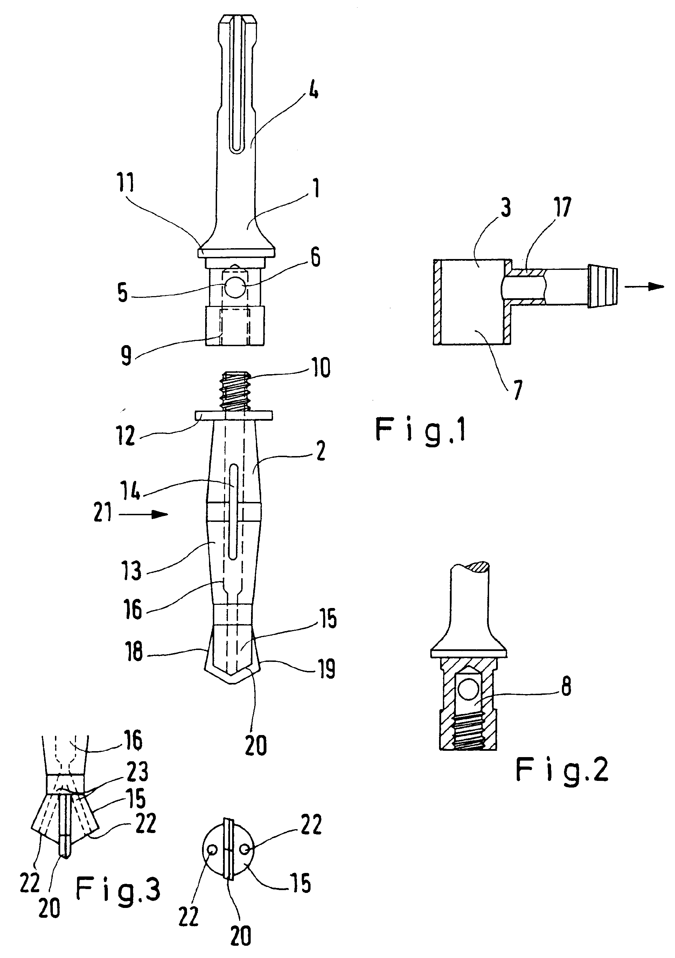

Die in Figur 1 dargestellte Bohrvorrichtung besteht aus einer Bohreraufnahme 1, einem Bohrer 2 und einer Absaugglocke 3. Die Bohreraufnahme 1 besitzt einen Befestigungsschaft 4, mit dem sie in ein Bohrfutter oder dergleichen einer Bohrmaschine einspannbar ist. Weiterhin besitzt die Bohreraufnahme 1 einen Absaugraum 5, auf den sich die Bohrglocke 3 von unten aufschieben läßt. Eine Öffnung 6 verbindet den Absaugraum 5 mit dem Innenraum 7 der Absaugglocke 3.

Am unteren Ende der Bohreraufnahme 1 befindet sich in einer den Absaugraum ausbildenden Bohrung 8 ein Innengewinde 9. In Figur 2 ist die Anordnung der Bohrung 8 dargestellt.

Der Bohrer 2 läßt sich mit einem Gewindeabschnitt 10 in das Innengewinde 9 einschrauben. Zuvor wird jedoch die Absaugglocke 3 über den Absaugraum 5 aufgeschoben. Ein an der Bohreraufnahme 1 ausgebildeter Flansch 11 und ein am Bohrer 2 ausgebildeter Flansch 12 schließen die Absaugglocke 3 an ihren beiden Stirnseiten ab.

Der Bohrer 2 besitzt einen glatten Schaft 13, der mit am Umfang verteilt angeordneten Kerben 14 versehen ist. Die Kerben 14 befinden sich im Bereich des größten Schaftquerschnittes und dienen als äußere Luftkanäle und als Reibelemente, die ein Festklemmen des Bohrers im Bohrloch verhindern. Die Kerben 14 könnten auch in spitzem Winkel gegenüber der Längsachse geneigt angeordnet sein und eine Steigung haben, die der Steigung von Bohrmehlnuten entspricht. Die Nuten 14 können jedoch auch mit einer Steigung versehen sein, die das in diesem Bereich anfallende Bohrmehl in Richtung Bohrkopf 15 transportiert.

Der Bohrer 2 besitzt eine axiale Durchgangsbohrung 16, die in der Zeichnung mit unterbrochenen Linien dargestellt ist. Die Durchgangsbohrung 16 besitzt ihren kleinsten Durchmesser im Bereich des Bohrkopfes 15 und des sich daran anschließenden kleinsten Schaftdurchmessers. Im Bereich des erweiterten Schaftquerschnitts ist die Durchgangsbohrung 16 ebenfalls mit einem größeren Durchmesser ausgebildet, wodurch eine erhebliche Verbesserung der Bohrmehlabsaugung erzielt wird. Der Absaugraum 5 besitzt einen nochmals erweiterten Durchmesser und ist über große Öffnungen 6 zur Absaugglocke 3 offen. Somit ergibt sich für die Absaugeinrichtung ein sich von der Bohrkopfspitze ständig vergrößernder Strömungsquerschnitt, der ein optimales Absaugen des Bohrmehls begünstigt.

Die Absaugglocke 3 besitzt einen seitlich abstehenden Absaugstutzen 17, an den ein hier nicht dargestellter Absaugschlauch einer Saugpumpe in ansich bekannter Weise anschließbar ist.

Es wird noch darauf hingewiesen, daß die am Bohrkopf 15 seitlich überstehenden Schneiden 18, 19 der Bohrplatte 20 zur Herstellung der Hinterschneidung in einem Bohrloch dienen. Der maximale Bohrkopfdurchmesser wird somit von den Seitenschneiden 18, 19 bestimmt und ist nur geringfügig größer als die maximale Querschnittserweiterung im Bereich 21 des Bohrschaftes. Die Querschnittserweiterung des Bohrschaftes dient als Schwenklager, welches ein definiertes Ausschwenken des Bohrkopfes 15 am Bohrlochgrund ermöglicht. Der erweiterte Bereich 21 liegt dabei an der Bohrlochwandung an.

Figur 3 zeigt den Bohrer 2 im Bereich des Bohrkopfes 15. Die Durchgangsbohrung 16 gabelt sich und führt zu Absaugöffnungen 22, die zu beiden Seiten der Bohrplatte 20 an der Stirnseite des Bohrkopfes 15 ausgebildet sind. Zu diesem Zweck können gerade Kanäle 23 innerhalb des Bohrkopfes 15 ausgebildet sein, die im Bohrschaft zusammenlaufen.

In Figur 3 ist der Bohrkopf 15 konisch verbreitert, jedoch besteht auch die Möglichkeit, den Bohrkopf wie in Figur 1 dargestellt als geraden Schaftteil auszubilden. Bei konisch verbreitertem Bohrkopf besteht jedoch die Möglichkeit, größere Absaugöffnungen 22 vorzusehen als bei einem Bohrkopf mit geringerem Durchmesser.

**Patentansprüche**

1. Bohrvorrichtung zur Herstellung von Bohrlöchern mit Hinterschneidung, die aus einer Bohreraufnahme (1), einem an der Bohreraufnahme befestigbaren Bohrer (2) und einer die Bohreraufnahme umschließenden Absaugglocke (3) besteht, wobei der Bohrer (2) einen Bohrkopf (15) mit seitlich überstehender Bohrplatte (20) hat, **dadurch gekennzeichnet**, daß der Bohrschaft (13) im mittleren Bereich (21) eine ein Schwenklager bildende Querschnittserweiterung aufweist, daß der Bohrer (2) eine vom Bohrkopf (15) ausgehende axiale Durchgangsbohrung (16) hat, die in einen Absaugraum (5) der Bohreraufnahme (1) mündet, daß der Absaugraum (5) zu der ihn umschließenden Absaugglocke (3) offen ist, und daß im Bereich der Querschnittserweiterung (21) am sonst glatten Bohrschaft Kerben (14) angebracht sind.

2. Bohrvorrichtung nach Anspruch 1, **dadurch gekennzeichnet**, daß die Kerben (14) gegenüber der Längsachse des Bohrers (2) in spitzem Winkel verlaufen.

3. Bohrvorrichtung nach Anspruch 2, **dadurch gekennzeichnet**, daß die Kerben (14) eine solche Steigung haben, daß sie das Bohrmehl bei Rotation des Bohrers in Richtung Bohrkopf transportieren.

4. Bohrvorrichtung nach einem der vorhergehenden Ansprüche, **dadurch gekennzeichnet**, daß die Absaugglocke (3) ein Rohrabschnitt mit seitlich abstehenden Absaugstutzen (17) ist, die zwischen jeweils einem an der Bohreraufnahme (1) und einem am Bohrschaft ausgebildeten Flansch (11; 12) gelagert ist.

5. Bohrvorrichtung nach einem der vorhergehenden Ansprüche, **dadurch gekennzeichnet**, daß die Durchgangsbohrung (16) von einem kleinen Durchmesser im Bereich der Bohrerspitze in einen größeren Durchmesser innerhalb des Bohrschaftes übergeht.

6. Bohrvorrichtung nach einem der vorhergehenden Ansprüche, **dadurch gekennzeichnet**, daß an dem Bohrkopf (15) abgewandten Ende des Bohrers (2) ein Gewindeabschnitt (10) ausgebildet ist, der in die Bohreraufnahme (1) eingeschraubt ist.

7. Bohrvorrichtung nach einem der vorhergehenden Ansprüche, **dadurch gekennzeichnet**, daß die Durchgangsbohrung (16) seitlich an der Bohrplatte (20) vorbeigeführt ist.

8. Bohrvorrichtung nach einem der vorhergehenden Ansprüche, **dadurch gekennzeichnet**, daß sich die Durchgangsbohrung (16) im Bereich des Bohrkopfes (15) gabelt und zu beiden Seiten der Bohrplatte (20) zu Absaugöffnungen (22) führt.

**Claims**

1. A drilling device for producing drilled holes with an undercut, which device consists of a drill bit holder (1), a drill bit (2) attachable to the drill bit holder, and a suction bell (3) surrounding the drill bit holder, wherein the drill bit (2) has a drill head (15) with a laterally projecting drill plate (20), **characterized in that** in its middle region (21) the drill shank (13) has a cross-sectional enlargement forming a pivot bearing, the drill shank (2) has a continuous axial bore (16) starting from the drill head (15), which bore opens into a suction chamber (5) of the drill bit holder (1), the suction chamber (5) is open towards the suction bell (3) surrounding it, and in the region of the cross-sectional enlargement (21) there are arranged indentations (14) on the otherwise smooth drill shank.

2. A drilling device according to claim 1, **characterized in that** the indentations (14) extend at an acute angle to the longitudinal axis of the drill bit (2).

3. A drilling device according to claim 2, **characterized in that** the pitch of the indentations (14) is such that they transport the drilling dust in the direction of the drill head on rotation of the drill bit.

4. A drilling device according to one of the preceding claims, **characterized in that** the suction bell (3) is a portion of a tube with a laterally projecting suction nozzle (17), which tube portion is mounted between respective flanges (11; 12) constructed on the drill bit holder (1) and on the drill shank.

5. A drilling device according to one of the preceding claims, **characterized in that** the continuous bore (16) passes from a small diameter in the region of the drill bit tip to a larger diameter inside the drill shank.

6. A drilling device according to one of the preceding claims, **characterized in that** on the end of the drill bit (2) remote from the drill head (15) there is constructed a threaded portion (10) which is screwed into the drill bit holder (1).

7. A drilling device according to one of the preceding claims, **characterized in that** the continuous bore (16) is guided laterally past the drill plate (20).

8. A drilling device according to one of the preceding claims, **characterized in that** the continuous bore

4

(16) forks in the region of the drill head (15) and leads to suction openings (22) on both sides of the drill plate (20).

## Revendications

1. Dispositif de perçage ou de forage pour la réalisation de trous forés à contre-dépouille, lequel est constitué par un organe (1) de réception de foret, par un foret (2) susceptible d'être fixé sur l'organe de réception et, par une cloche (3) d'aspiration qui entoure l'organe de réception de foret, le foret (2) comportant une tête (15) de foret munie d'une plaquette (20) de foret qui dépasse latéralement, dispositif **caractérisé en ce que** la tige (13) de foret présente dans la zone médiane (21) un élargissement de la section transversale formant un palier de pivotement ; en ce que le foret (2) comporte un alésage axial traversant (16), partant de la tête (15) de foret, et qui débouche dans un espace (5) d'aspiration ménagé dans l'organe (1) de réception de foret ; en ce que l'espace (5) d'aspiration est ouvert en direction de la cloche (3) d'aspiration qui l'entoure et en ce que, dans la zone de l'élargissement (21) de la section transversale, des rainures (14) sont ménagées sur la tige de foret, qui est lisse par ailleurs.

2. Dispositif de forage selon la revendication 1, **caractérisé en ce que** les rainures (14) s'étendent avec un angle aigu par rapport à l'axe longitudinal du foret (2).

3. Dispositif de forage selon la revendication 2, **caractérisé en ce que** des rainures (14) ont une inclinaison telle que, lors de la rotation du foret, elles transportent la poussière de forage dans la direction de la tête de forage.

4. Dispositif de forage selon une des revendications précédentes, **caractérisé en ce que** la cloche (3) d'aspiration est une pièce tubulaire comportant des embouts (17) d'aspiration qui s'écartent latéralement, laquelle pièce étant montée entre des flasques (11 ; 12) qui sont formés l'un sur l'organe (1) de réception du foret et l'autre sur la tige de foret. 5. Dispositif de forage selon une des revendications précédentes, **caractérisé en ce que** l'alésage traversant (16) passe d'un faible diamètre, dans la zone de la pointe de foret, à un plus grand diamètre à l'intérieur de la tige de foret.

6. Dispositif selon une des revendications précédentes, **caractérisé en ce qu'**à l'extrémité du foret (2) éloignée de la tête (15) de foret est réalisée une partie filetée (10), qui est vissée dans l'organe (1) de réception de foret.

7. Dispositif de forage selon une des revendications précédentes, **caractérisé en ce que** l'alésage traversant (16) passe sur le côté de la plaquette (20) de foret.

8. Dispositif de forage selon une des revendications précédentes, **caractérisé en ce que** l'alésage traversant (16) bifurque dans la zone de la tête (15) de foret et mène, des deux côtés de la plaquette (20) de foret, à des orifices (22) d'aspiration.

Fig.1

Fig.2

Fig.3